# EUROPEAN PATENT SPECIFICATION

(11) **EP 3 148 851 B1**
(45) Date of publication and mention of the grant of the patent: **11.11.2020**
(21) Application number: 15734454.0
(22) Date of filing: 29.05.2015
(51) Int. Cl.: B60T 8/26

(54) **ACTUATOR DEVICE FOR A COMBINED REAR-FRONT BRAKE SYSTEM OF A MOTOR VEHICLE, COMBINED REAR-FRONT BRAKE SYSTEM OF A MOTOR VEHICLE AND MOTOR VEHICLE THEREOF**
BREMSAKTUATOR FÜR EIN HINTEN-VORNE KRAFTFAHRZEUGBREMSSYSTEM, KOMBINIERTES HINTEN-VORNE BREMSYSTEM FÜR EIN KRAFTFAHRZEUG, UND SO EIN -KRAFTFAHRZEUG
ACTUATEUR DE FREINAGE ARRIÈRE-FRONTAL D'UN VÉHICULE MOTORISÉE,
SYSTÈME DE FREINAGE ARRIÈRE-FRONTAL D'UN TEL VÉHICULE MOTORISÉE, ET -VÉHICULE MOTORISÉE

(30) Priority: 30.05.2014 IT BG20140017
(43) Date of publication of application: 05.04.2017
(73) Proprietor: Freni Brembo S.p.A., 24035 Curno (Bergamo) (IT)
(72) Inventor: CEREDA, Marco, I-24035 Curno (Bergamo) (IT); LAVEZZI, Roberto, I-24035 Curno (Bergamo) (IT)
(74) Representative: Mitola, Marco
(86) International application number: PCT/IB2015/054073
(87) International publication number: WO 2015/181798

(56) References cited:
- EP-A2- 2 684 788
- DE-A1-102009 009 269
- JP-A- 2008 290 699
- US-B1- 6 772 864

## Description

### FIELD OF APPLICATION

The present invention relates to an actuator device for a combined rear-front brake system of a motor vehicle, a combined rear-front brake system of a motor vehicle and motor vehicle thereof.

### STATE OF THE ART

In particular, in the field of motor vehicles it is known of to provide combined braking systems i.e. braking systems that allow, using a single brake command (lever or pedal), the automatic operation at least partially, of both the brake devices arranged on both front and/or rear axles respectively.

The purpose of combined braking is to maximise the use of tyre road friction to increase braking performance.

### PRESENTATION OF THE INVENTION

To resolve the aforementioned problems, to date solutions have been adopted in the art of combined braking systems which provide for the use of hydraulic actuators of the braking devices typically such as disc brake calipers. Combined braking takes place for example by means of a hydraulic connection between the hydraulic actuation systems of said braking devices.

This solution however is expensive and requires the use of hydraulic actuator devices on the motor vehicle (typical of disc brakes) which are more expensive than mechanical actuator devices (typical of drum brakes).

The purpose of the present invention is to make a combined braking system for motor vehicles which is reliable and economical, comprising both mechanically operated and hydraulically operated braking devices, and which can be easily applied to existing systems.

Such combined braking systems typically comprise a drum brake, mechanically operated and placed on the rear wheel or axle, and at least a disc brake, hydraulically operated, and placed on the front wheel or axle.

As known, the braking action exerted on the rear wheel or axle is less incisive than that exerted on the front wheel or axle which, on account of the deceleration and relative transfer of the load onto the front axle is able to ensure much greater deceleration safely, without the risk of blocking the wheel or relative axle.

As a result, it is important for the braking action on the rear wheel or axle to be automatically combined with the braking action on the front wheel or axle so as to guarantee an adequate deceleration of the vehicle even in the case of actuation by the user of the brake actuator on the rear wheel or axle only.

A solution according to the preamble of claim 1 is known, from example, from JP 2008 290699 A.

The need is therefore felt to create a combined braking system from the back to the front, of a reliable and economic type, comprising at least one mechanically operated brake and at least one hydraulically operated brake.

Such need is satisfied by an actuator device for a combined rear-front brake system of a motor vehicle, according to claim 1.

In particular, such requirement is met by an actuator device for a combined rear-front brake system of a motor vehicle comprising a device body housing and guiding an actuation rod, for the mechanical actuation of an associable first braking device, wherein the device body defines a axial direction X-X, a manual actuation lever or pedal mechanically connected to said device body to command the translation thereof along said axial direction X-X, a first actuation stroke in a first actuation direction (A), wherein the device body defines a hydraulic fluid chamber which houses a float adapted to pressurise the fluid of a part of said chamber, said chamber being able to be fluid-connected through a delivery to an associable second, hydraulically actuated braking device, separate from the first braking device, wherein between the float and the device body there are arranged elastic means so as actuate the float and pressurise the hydraulic fluid chamber, as a result of the actuation of the actuating rod by the lever or by the manually actuated pedal, wherein the float and the actuating rod are mutually parallel and coaxial along said axial direction X-X.

According to a possible embodiment, the device body pulls in translation, along the axial direction (X-X), the actuating rod in the first actuation direction (A), wherein the device body defines a hydraulic fluid chamber which houses a float adapted to pressurise the fluid of a part of said chamber when translated with respect to the device body, in an axial direction, by a second actuation stroke, in a second actuation direction (B) opposite to the first actuation direction (A).

According to a possible embodiment, the device body includes elastic means which exert an elastic thrust on the float in the first actuation direction (A) to keep the device body and the float axially mutually integral, said elastic means opposing the actuating thrust of the actuating lever or pedal, wherein the float translates with respect to the device body by said second actuation stroke in the second actuation direction when the thrust exerted on the device body by means of the actuating lever or pedal exceeds the elastic thrust exerted by the elastic means.

According to a possible embodiment, the float houses the actuating rod which has an undercut with respect to the float, so that the float can pull in translation the actuating rod only in the first actuating direction (A).

According to a possible embodiment, the float has a limit switch with respect to the device body which defines the float position at rest, so as to translate in relation to the device body only by a second actuation stroke, in a second actuation direction opposite said first actuation direction.

According to a possible embodiment, the device body is in fluid connection with a liquid tank which is connected to said hydraulic fluid chamber through a feeding hole, wherein, in the rest position of the actuator device (4), the feeding hole (60) is arranged axially spaced from a seal (64) placed on the head of the float in the second actuation direction, the distance between the feeding hole and the head of the float in the rest position defining an idle stroke of the float, during which the feeding hole places the chamber and the tank in communication and the fluid is not pressurised by the float.

According to a possible embodiment, the seal on the head of the float is shaped in such a way as to close the feeding hole after performing a stroke equal to or greater than said idle stroke, in said second actuation direction (B).

According to a possible embodiment, the elastic means are arranged coaxially to the float between a shoulder of the device body and a plate integral with the float so as to be preloaded in compression and influence the float in a rest condition wherein the fluid in the hydraulic fluid chamber is not pressurised by the float.

According to a possible embodiment, said liquid tank is integral with the device body.

In addition, the technical problem of the present invention is also solved by a combined rear-front brake system of a motor vehicle comprising an actuator device as described above and comprising, as a first braking device, a drum brake, mechanically connected to said actuation rod, and comprising as a second braking device, a disc brake having a disc brake caliper in fluid connection with said hydraulic fluid chamber of the device body.

According to a possible embodiment, said disc brake caliper of the combined rear-front brake system is fitted with an additional or independent manual lever or pedal actuation device.

According to a possible embodiment, said actuator device is mechanically connected to the actuation lever or pedal through a connecting rod, and said actuation lever or pedal is provided with a hinge for the attachment to a chassis of an associable motor vehicle so that the actuator device can roto-translate with the actuation rod.

In addition, the technical problem of the present invention is also solved by a motor vehicle comprising an actuator device as described above.

According to a possible embodiment, the motor vehicle comprises a chassis, in which the actuator device is mechanically connected to the actuation lever or pedal through a connecting rod, and wherein said actuation lever or pedal is provided with a hinge attached to said chassis so that the actuator device can roto-translate with the actuation rod, while the actuation lever or pedal is actuated by rotating about the hinge.

According to a possible embodiment, said brake system is a combined rear-front brake system, in which the first mechanically actuated braking device is at least one drum brake arranged on the rear axle of the motor vehicle and the second hydraulically actuated braking device is at least one disc brake arranged on the front axle of the motor vehicle.

### DESCRIPTION OF THE DRAWINGS

Further characteristics and advantages of the present invention will be more clearly comprehensible from the description given below of its preferred and non-limiting embodiments, wherein:

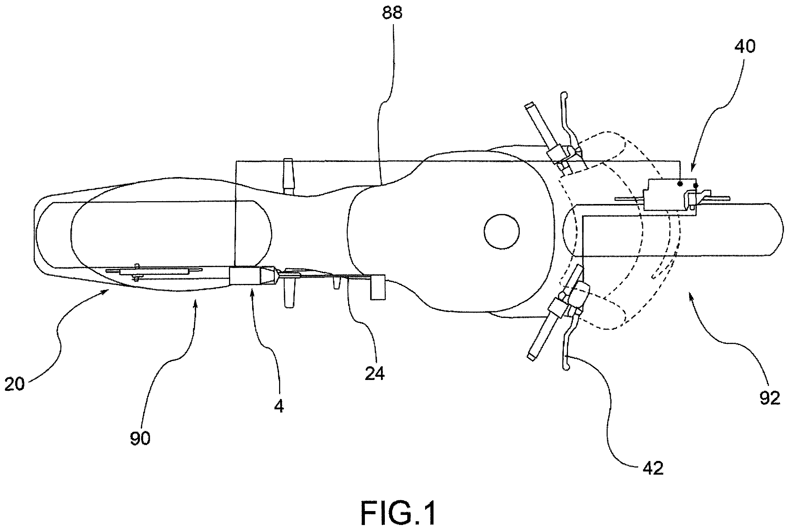

figure 1 is a plan view of a motor vehicle according to one embodiment of the present invention,

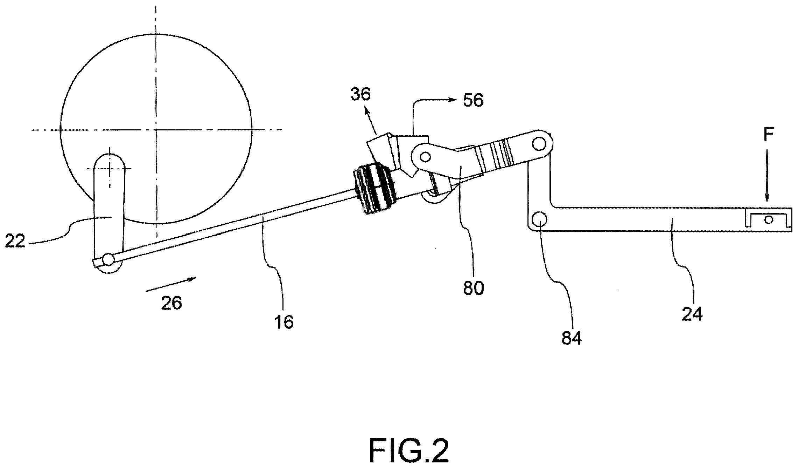

figure 2 is a schematic side view of an actuator device according to one embodiment of the present invention, in a rest configuration.
figure 3 is a partial cross-section view of the actuator device in figure 2;

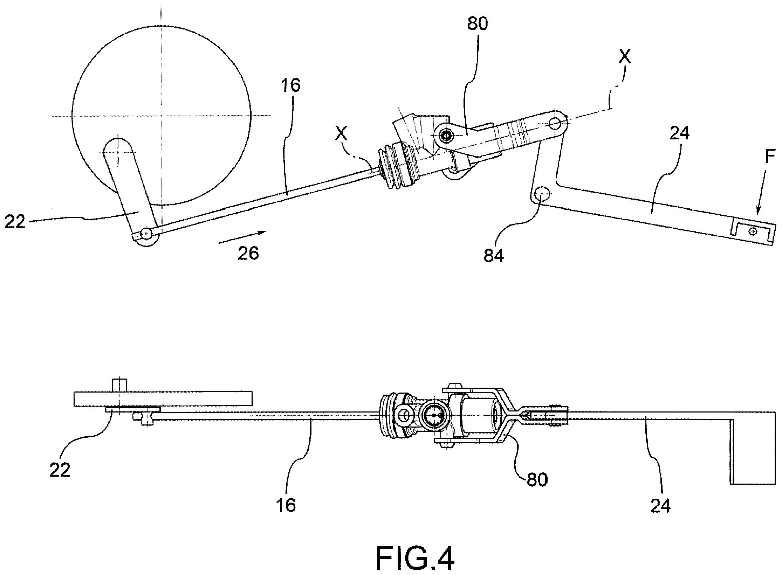

figure 4 shows side and plan views of an actuator device according to one embodiment of the present invention, in a configuration of partial actuation.
figure 5 is a partial cross-section view of the actuator device in figure 4 after full recovery of the idle stroke;

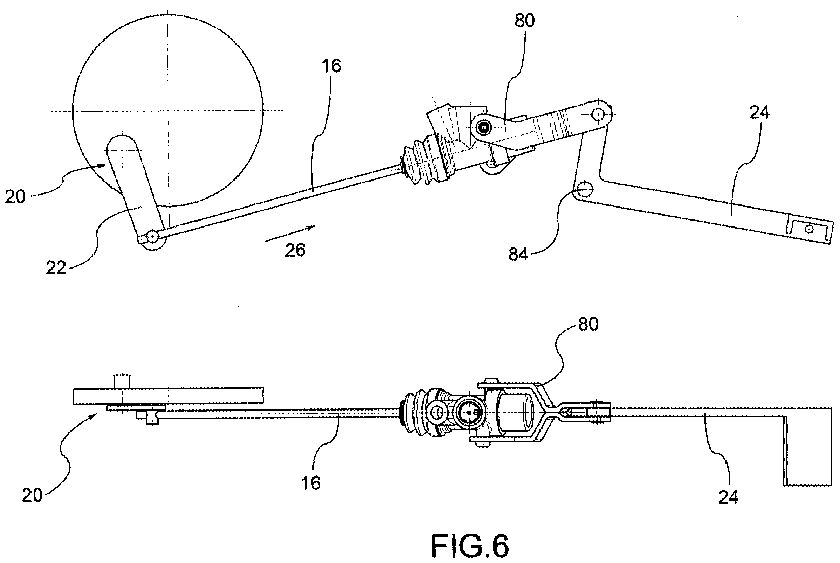

figure 6 shows side and plan views of an actuator device according to one embodiment of the present invention, in a configuration of total actuation.
figure 7 is a partial cross-section view of the actuator device in figure 6.

The elements or parts of elements common to the embodiments described below will be indicated using the same reference numerals.

### DETAILED DESCRIPTION

With reference to the aforementioned figures, reference numeral 4 globally denotes an actuator device for a combined rear-front brake system of a motor vehicle 8.

For the purposes of the present invention the concept of motor vehicle should be understood in a broad sense, meaning not only a motorcycle, but also a vehicle with three wheels and a motor quadricycle.

The actuator device 4 comprises a device body 12 housing and guiding an actuating rod 16 for the mechanical actuation of an associable first braking device 20, wherein the device body 12 constrains the actuating rod 16 to slide in an axial direction X-X.

The first braking device 20 may for example comprise a drum brake typically comprising jaws operated in contact against a drum integral with a wheel hub, in a known manner.

The operation of said jaws may for example be performed by rotating a lever 22 in a known manner.

The actuator device 4 comprises a manually actuated lever or pedal 24 mechanically connected to said device body 12 in order to control the translation thereof along said axial direction X-X, by a first actuation stroke 26 in a first actuation direction A.

The device body 12 defines a hydraulic fluid chamber 28 which houses a float 32 adapted to pressurise said hydraulic fluid chamber 28.

The hydraulic fluid chamber 28 is fluid-connected through a delivery 36 to an associable second hydraulically actuated braking device 40, separate from the first braking device 20.

For example the second braking device 40 comprises a disc brake caliper, hydraulically operated.

For the purposes of the present invention the type of disc brake caliper is not relevant, comprising fixed-type calipers, floating calipers or other configurations.

Said disc brake caliper 40 is provided with a further and independent manually actuated lever or pedal device 42.

Between the float 32 and the device body 12 there are arranged elastic means 44 so as actuate the float 32 and pressurise the hydraulic fluid chamber 28, as a result of the actuation of the actuating rod 16 by the lever or by the manually actuated pedal 24.

The device body 12 pulls in translation, along the axial direction X-X, the actuating rod 16 in the first actuation direction A, so as to operate the first braking device 20.

The device body 12 defines a hydraulic fluid chamber 28 which houses a float 32 adapted to pressurise the fluid of said chamber 28 when translated with respect to the device body 12, in an axial direction X-X, by a second actuation stroke 42, in a second actuation direction B opposite the first actuation direction A.

According to one embodiment, the device body 12 comprises elastic means 44 which exert an elastic thrust on the float 32 in the first actuation direction A to keep the device body 12 and the float 32 axially mutually integral, said elastic means 44 opposing the actuating thrust of the actuating lever or pedal 24.

In particular, according to one embodiment, the float 32 translates with respect to the device body 12 by said second actuation stroke 42 in the second actuation direction B when the thrust exerted on the device body 12 by means of the actuating lever or pedal 24 exceeds the elastic thrust exerted by the elastic means 44.

Said elastic means provide an initial setting of the actuator device 4 given that the actuation or operation of the second braking device 40 does not happen before the elastic thrust exerted by the elastic means has been overcome by the thrust exerted on the device body 12 by the user acting on the actuating lever or pedal 24. In other words, increasing the elastic characteristic and thus the rigidity of the elastic means 44, it is possible to raise the intervention threshold of the automatic actuation of the second braking device 40 following the manual actuation of the first braking device 20, and vice versa.

For example, the float 32 and the actuating rod 16 are parallel and coaxial to each other in said axial direction X-X.

In particular, the float 32 houses the actuating rod 16.

Said actuating rod 16 has, for example, an undercut 48 with respect to the float 32, so that the float can pull the actuating rod 16 in translation only in the first actuating direction A.

According to one embodiment, the float 32 has a limit switch 52 with respect to the device body 12 which defines the position of the float 32 at rest, so as to be able to translate in relation to the device body 12 only by a second actuation stroke 42, in a second actuation direction B opposite said first actuation direction A.

In other words, the limit switch 52 defines the maximum translation of the float 32 in relation to the device body 12 in the first actuation direction A.

According to one embodiment, the device body 12 is in fluid connection with a liquid tank 56 which is connected to said hydraulic fluid chamber 28 through a feeding hole 60, wherein in the rest position of the actuator device 4, the at least one feeding hole 60 is arranged axially spaced from a seal 64 of the float 32 in the second actuation direction B, said seal 64 being positioned on the top of the float 32. For example, said seal 64 seal is a lip seal.

The liquid tank 56 may also be integral with the device body 12.

The distance between the at least one feeding hole 60 and the seal 64 of the float 32 in the rest condition defines an idle stroke 68 of the float 32, during which the at least one feeding hole 60 places the hydraulic fluid chamber 28 and the fluid tank 56 in communication and the fluid is not pressurised by the float 32.

Said idle stroke 68 represents a second setting of the actuator device given that the actuation or operation of the second braking device 40 does not happen before the actuating lever or pedal 24 is actuated so as to translate the float 32 by a second actuation stroke 42 at least equal to said idle stroke 68.

In particular, the seal 64 of the float 32 is shaped in such a way as to close the feeding hole 60 after performing a stroke equal to or greater than said idle stroke 68, in said second actuation direction B.

According to one embodiment, the elastic means 44 are arranged coaxially to the float 32 between a shoulder 72 of the device body 12 and a plate 76 integral with the float 32 so as to be preloaded in compression and influence the float 32 in a rest condition wherein the fluid in the hydraulic fluid chamber 28 is not pressurised by the float 32.

The actuator device 4 is mechanically connected to the actuation lever or pedal 24 for example by a connecting rod 80, and the actuation lever or pedal 24 is provided with a hinge 84 for the attachment to a chassis 88 of an associable motor vehicle 8 so that the actuator device 4 can roto-translate with the actuation rod 16.

In turn, the actuating lever or pedal 24 is operated by the user rotating around said hinge 84.

Preferably, the brake system is a combined rear-front brake system, wherein the first mechanically actuated braking device 20 is at least one drum brake arranged on a rear axle 90 of the motor vehicle 8 and the second hydraulically actuated braking device 40 is at least one disc brake arranged on the front axle 92 of the motor vehicle 8.

A combined rear-front brake system is therefore understood to mean that the single operation of the first braking device 20, placed preferably on the rear axle 90, automatically also determines the operation of the second braking device 40 placed on the front axle 92.

It is clear that for the purposes of the present invention, it is also possible to obtain a combined front-rear brake system so that the single operation of the first braking device, placed on the front axle 92, automatically also determines the operation of the second braking device 40 placed on the rear axle 90.

The functioning of an actuator device according to the present invention will now be described

In particular, it starts from the rest condition in which the user does not operate the first braking device 20, using the corresponding manually operated pedal or lever 24.

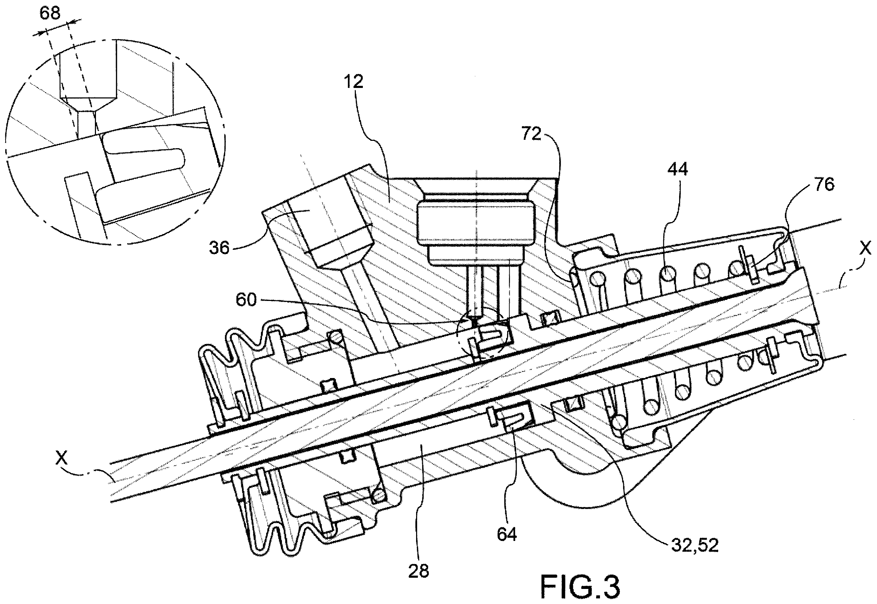

In this condition, the float 32 is in the rest configuration and therefore the feeding hole is not occluded by said float 32, i.e. by its seal 64 (figure 3); in other words, in this configuration there is fluid connection between the tank and the hydraulic fluid chamber 28 so that the latter is not pressurised by said float and the second braking device 40 is not activated by the delivery 36. A force F is then exerted on the actuating pedal or lever 24 to perform braking of the vehicle 8.

Said manual action on the actuating pedal or lever 24 determines the displacement of the device 12 associated with said actuating pedal or lever 24 by the connecting rod 80.

The displacement of the device body 12 also determines the translation of the actuating rod 16 which, thanks to the undercut 48, is pushed in translation by the device body in the first actuation direction A by the first actuation stroke 26. Said translation of the actuating rod 16 determines a first braking action by the first braking device 20 connected mechanically thereto.

It should be noted that the thrust action exerted by the user on the actuating lever or pedal 24 discharges on the elastic means 44 which tend to oppose any relative movement between the float 32 and the device body 12.

Depending on the setting of such elastic means there is therefore a first phase wherein the braking action is exercised by the first braking device 20 but no braking action is exerted by the second braking device 40, until the elastic action of the elastic means 44 is overcome. In other words in this first phase the float, under the action of the elastic means 44 remains in its rest condition.

When the force F exerted by the user is such as to overcome the elastic action of the elastic means 44, these are no longer able to guarantee the rest position of the float which thus begins to move from its rest condition and to translate relative to the device body by a second actuation stroke 42 in the second actuation direction B.

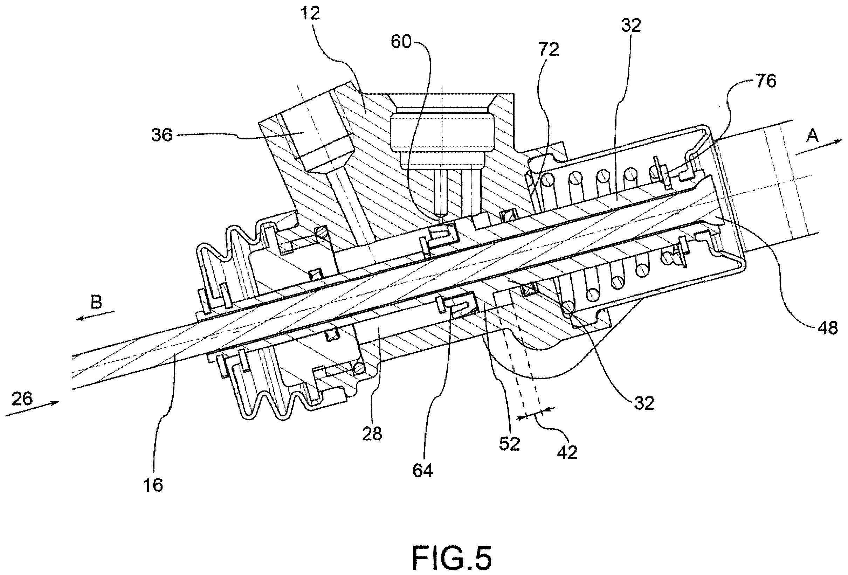

Said second actuation stroke also corresponds to a partial compression of the elastic means 44 compared to the rest configuration (Figure 5).

The first intervention setting or automatic actuation of the second braking device 40 is thus due to the choice of the elastic constant of the elastic means 44. If the device 4 is configured so that in the rest configuration 64 the seal 64 of the float 32 is flush with the feeding hole 60 (i.e. in the absence of the idle stroke 68), then upon the immediate displacement of the float of the second actuation stroke 42 there is a corresponding substantially immediate actuation of the second braking device 40 following the pressurisation of the fluid in the room 24. In fact such pressurisation occurs only after occluding said feeding hole 60. In this case the intervention setting of the actuator device 4 is achieved acting exclusively on the elastic constant and the elastic means 44.

If instead an idle stroke 68 is provided for, then the intervention setting of the second braking device 40 is also carried out in the light of the first stroke of the float: in other words the fluid chamber 28 is not pressurised and thus does not activate the second braking device until the float 32 has performed a second actuation stroke 42 in the second actuation direction B at least equal to said idle stroke 68 (figure 5).

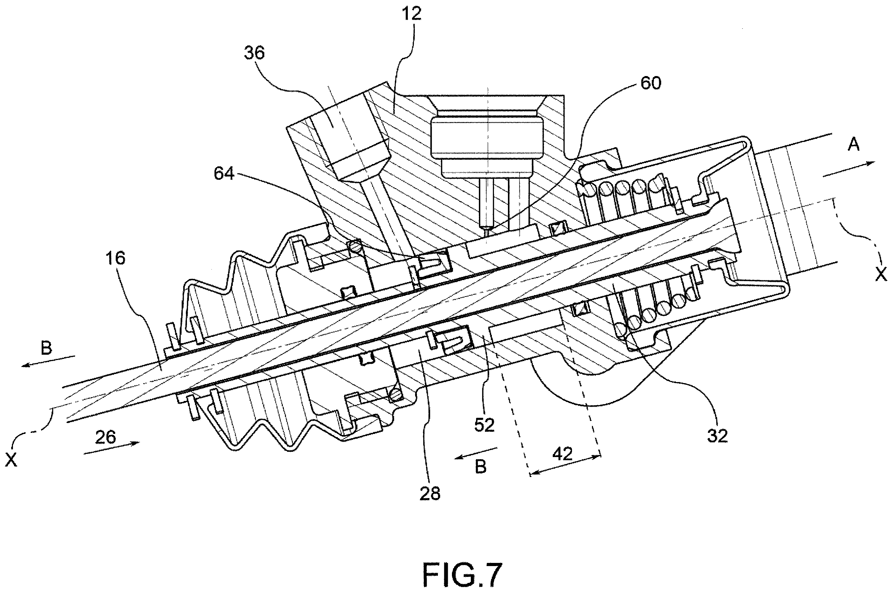

For example, the actuator device 4 also provides for a maximum stroke of the float 32: in other words it provides that the float 32 never completely occludes the delivery 36 (figure 7).

As may be appreciated from the description, the actuator device for a combined rear-front brake system of a motor vehicle 8 according to the present invention overcomes the drawbacks presented of the prior art.

In fact, the actuator device allows the user to manually actuate the mechanical braking device for example on a wheel or rear axle and, depending on the setting of the device, to also automatically actuate the hydraulic braking device placed, for example, on the front wheel or axle.

The actuator device of the present invention is simple and inexpensive to make and can be easily inserted in a pre-existing non-combined braking system, i.e. with separate and independent actuation of the various braking devices, so as to turn it into a combined type, preferably from the rear to the front, increasing the effectiveness of said braking system.

This solution is also of limited invasiveness as regards the layout of the vehicle and, as seen, also feasible for vehicles already on the market.

The intervention of the combined braking system can be easily calibrated on the basis not only of the type of the vehicle but also on the load acting, as seen, on the setting, i.e. on the preload of the spring.

This way it is possible to customize and calibrate the intervention of combined braking according to the user's taste but also to the actual load conditions of the vehicle.

The device is always safe and reliable since, in case of failure, it does not affect the operation of individual braking devices, but at most does not perform combined automatic braking.

A person skilled in the art may make numerous modifications and variations to the actuator devices, to the combined rear-front brake system of a motor vehicle and relative motor vehicle described above so as to satisfy contingent and specific requirements while remaining within the sphere of protection of the invention as defined by the following claims.

## Claims

1. Actuator device (4) for a combined rear-front brake system of a motor vehicle (8) comprising,
a device body (12) housing and guiding an actuating rod (16) for the mechanical actuation of an associable first braking device (20), wherein the device body (12) constrains the actuating rod (16) to slide in an axial direction (X-X),
a manually actuated lever or pedal (24) mechanically connected to said device body (12) in order to control the translation thereof along said axial direction (X-X), of a first actuation stroke (26) according to a first actuation direction (A),
- wherein the device body (12) defines a hydraulic fluid chamber (28) which houses a float (32) adapted to pressurise said hydraulic fluid chamber (28), said chamber (28) being able to be fluid-connected through a delivery (36) to an associable second hydraulically actuated braking device (40), separate from the first braking device (20),
- wherein between the float (32) and the device body (12) there are arranged elastic means (44) so as actuate the float (32) and pressurise the hydraulic fluid chamber (28), as a result of the actuation of the actuating rod (16) by the lever or by the manually actuated pedal (24),
**characterised in that**
the float (32) and the actuating rod (16) are mutually parallel and coaxial along said axial direction (X-X).

2. Actuator device (4) according to claim 1, wherein the device body (12) pulls in translation, along the axial direction (X-X), the actuating rod (16) in the first actuation direction (A),
- wherein the device body (12) defines a hydraulic fluid chamber (28) which houses a float (32) adapted to pressurise the fluid of said chamber (28) when translated with respect to the device body (12), in an axial direction (X-X), of a second actuation stroke (42), in a second actuation direction (B) opposite to the first actuation direction (A).

3. Actuator device (4) according to claim 2, wherein the device body (12) includes elastic means (44) which exert an elastic thrust on the float (32) in the first actuation direction (A) to keep the device body (12) and the float (32) axially mutually integral, said elastic means (44) opposing the actuating thrust of the actuating lever or pedal (24),
- wherein the float (32) translates with respect to the device body (12) of said second actuation stroke (42) in the second actuation stroke (B) when the thrust exerted on the device body (12) by means of the actuating lever or pedal (24) exceeds the elastic thrust exerted by the elastic means (44).

4. Actuator device (4) according to any preceding claim, wherein the float (32) houses the actuating rod (16) which has an undercut (48) with respect to the float (32), so that the float (32) can pull in translation the actuating rod (16) only in the first actuating direction (A) .

5. Actuator device (4) according to any of the claims from 1 to 3 wherein the float (32) is constrained in the axial direction (X-X) to the actuating rod (16), so as make said float (32) and said actuating rod (16) integral.

6. Actuator device (4) according to any preceding claim, wherein the float (32) has a limit switch (52) with respect to the device body (12) which defines the float position at rest (32), so as to translate in relation to the device body (12) only by a second actuation stroke (42), in a second actuation direction (B) opposite to said first actuation direction (A).

7. Actuator device (4) according to claim 6, where the device body (12) is in fluid connection with a liquid tank (56) which is connected to said hydraulic fluid chamber (28) through a feeding hole (60), wherein in rest position of the actuator device (4), the feeding hole (60) is arranged axially spaced from a seal (64) of the float (32) in the second actuation direction (B), the distance between the feeding hole (60) and the seal (64) of the float (32) in rest position defining an idle stroke (68) of the float (32), during which the fluid is not pressurized by the float (32).

8. Actuator device (4) according to claim 7, wherein the seal (64) of the float (32) is shaped in such a way as to close the feeding hole (60) after a second actuation stroke (42) equal to or greater than said idle stroke (68), in said second actuation direction (B).

9. Actuator device (4) according to any preceding claim, wherein the elastic means (44) are arranged coaxially to the float (32), between a shoulder (72) of the device body (12) and a plate (76) integral with the float (32) so as to be preloaded and influence the float (32) in a rest condition wherein the fluid in the hydraulic fluid chamber (28) is not pressurized by the float (32).

10. Actuator device (4) according to any one of the preceding claims, wherein said liquid tank (56) is integral with the device body (12).

11. Combined rear-front brake system of a motor vehicle comprising an actuator device (4) according to any preceding claim and including, as a first braking device (20), a drum brake, mechanically connected to said actuation rod (16), and including as a second braking device (40), a disc brake having a brake caliper in fluid connection with said hydraulic fluid chamber (28) of the device body (12).

12. System according to claim 11, wherein said disc brake caliper is provided with a further and independent manually actuated lever or pedal device (22).

13. System according to claim 11 or 12, wherein said actuator device (4) is mechanically connected to the actuation lever or pedal (24) through a connecting rod (80), and wherein said actuation lever or pedal (24) is provided with a hinge (84) for the attachment to a chassis (88) of an associable motor vehicle (8) so that the actuator device (4) can roto-translate with the actuation rod (16).

14. Motor vehicle (8) comprising an actuator device (4) according to any one of claims 1 to 10.

15. Motor vehicle (8) comprising a system according to any one of claims 11 to 13, wherein the motor vehicle (8) comprises a chassis (88), and wherein the actuator device (4) is mechanically connected to the actuation lever or pedal (24) through a connecting rod (80), and wherein said actuation lever or pedal (24) is provided with a hinge (84) attached to said chassis (88) so that the actuator device (4) can roto-translate with the actuation rod (16), while the actuation lever or pedal (24) is actuated by rotating about the hinge (84).

16. Motor vehicle (8) according to claim 14 or 15, wherein said braking system is a combined front-rear brake system, wherein the first mechanically actuated braking device (20) is at least one drum brake arranged on a rear axle (90) of the motor vehicle (8) and the second hydraulically actuated braking device (40) is at least one disc brake arranged on the front axle (92) of the motor vehicle (8).

## Patentansprüche

1. Aktuator-Vorrichtung (4) für ein kombiniertes Rück-Vorder-Brems-System eines Motor-Fahrzeugs (8), umfassend
einen Vorrichtung-Körper (12), welcher einen Betätigung-Stab (16) für die mechanische Betätigung einer zugänglichen ersten Brems-Vorrichtung (20) aufnimmt und führt, wobei der Vorrichtung-Körper (12) den Betätigung-Stab (16) begrenzt, um in einer axialen Richtung (X-X) zu gleiten,
einen manuell betätigten Hebel oder ein Pedal (24), welches mit dem Vorrichtung-Körper (12) mechanisch verbunden ist, um die Verlagerung davon entlang der axialen Richtung (X-X) eines ersten Betätigung-Hubs (26) gemäß einer ersten Betätigung-Richtung (A) zu steuern,
- wobei der Vorrichtung-Körper (12) eine hydraulische Fluid-Kammer (28) definiert, welche einen Schwimmer (32) auf, welcher dazu eingerichtet ist, die hydraulische Fluid-Kammer (28) unter Druck zu versetzen, wobei die Kammer (28) in der Lage ist, durch eine Liefereinheit (36) mit einer zugänglichen zweiten hydraulisch betätigten Brems-Vorrichtung (40), welche von der ersten Brems-Vorrichtung (20) getrennt ist, fluidisch verbunden zu sein,
- wobei zwischen dem Schwimmer (32) und dem Vorrichtung-Körper (12) elastische Mittel (44) angeordnet sind, um den Schwimmer (32) zu betätigen und die hydraulische Fluid-Kammer (28) unter Druck zu versetzen, als ein Ergebnis der Betätigung des Betätigung-Stabs (16) durch den Hebel oder durch das manuell betätigte Pedal (24), **dadurch gekennzeichnet, dass**
der Schwimmer (32) und der Betätigung-Stab (16) zueinander parallel und entlang der axialen Richtung (X-X) koaxial sind.

2. Aktuator-Vorrichtung (4) nach Anspruch 1, wobei der Vorrichtung-Körper (12) in einer Verlagerung entlang der axialen Richtung (X-X) den Betätigung-Stab (16) in der ersten Betätigung-Richtung (A) zieht,
- wobei der Vorrichtung-Körper (12) eine hydraulische Fluid-Kammer (28) definiert, welche einen Schwimmer (32) aufnimmt, welcher dazu eingerichtet ist, das Fluid der Kammer (28) unter Druck zu versetzen, wenn in Bezug auf den Vorrichtung-Körper (12) verlagert, in einer axialen Richtung (X-X) eines zweiten Betätigung-Hubs (42) in einer zweiten Betätigung-Richtung (B), welche der ersten Betätigung-Richtung (A) entgegengesetzt ist.

3. Aktuator-Vorrichtung (4) nach Anspruch 2, wobei der Vorrichtung-Körper (12) elastische Mittel (44) umfasst, welche einen elastischen Schub auf den Schwimmer (32) in der ersten Betätigung-Richtung (A) ausüben, um den Vorrichtung-Körper (12) und den Schwimmer (32) axial zueinander integral zu halten, wobei die elastischen Mittel (44) dem Betätigung-Schub des Betätigung-Hebels oder des Pedals (24) entgegengesetzt sind,
- wobei der Schwimmer (32) in Bezug auf den Vorrichtung-Körper (12) des zweiten Betätigung-Hubs (42) in dem zweiten Betätigung-Hub (B) verlagert, wenn der Schub, welcher auf den Vorrichtung-Körper (12) mittels des Betätigung-Hebels oder des Pedals (24) ausgeübt wird, den elastischen Schub überschreitet, welcher durch die elastischen Mittel (44) ausgeübt wird.

4. Aktuator-Vorrichtung (4) nach einem vorhergehenden Anspruch, wobei der Schwimmer (32) den Betätigung-Stab (16) aufnimmt, welcher einen Hinterschnitt (48) in Bezug auf den Schwimmer (32) aufweist, so dass der Schwimmer (32) in Verlagerung den Betätigung-Stab (16) nur in der ersten Betätigung-Richtung (A) ziehen kann.

5. Aktuator-Vorrichtung (4) nach einem der Ansprüche 1 bis 3, wobei der Schwimmer (32) in der axialen Richtung (X-X) auf den Betätigung-Stab (16) begrenzt ist, um den Schwimmer (32) und den Betätigung-Stab (16) integral zu machen.

6. Aktuator-Vorrichtung (4) nach einem vorhergehenden Anspruch, wobei der Schwimmer (32) einen Grenz-Schalter (52) in Bezug auf den Vorrichtung-Körper (12) aufweist, welcher die Schwimmer-Position in Ruhe (32) definiert, um in Relation zu dem Vorrichtung-Körper (12) nur durch einen zweiten Betätigung-Hub (42) in einer zweiten Betätigung-Richtung (B) zu verlagern, welche der ersten Betätigung-Richtung (A) entgegengesetzt ist.

7. Aktuator-Vorrichtung (4) nach Anspruch 6, wobei der Vorrichtung-Körper (12) mit einem Flüssigkeit-Tank (56) in Fluidverbindung ist, welcher mit der hydraulischen Fluid-Kammer (28) durch ein Einspeisung-Loch (60) verbunden ist, wobei in einer Ruheposition der Aktuator-Vorrichtung (4) das Einspeisung-Loch (60) axial von einer Dichtung (64) des Schwimmers (32) in der zweiten Betätigung-Richtung (B) beabstandeten ist, wobei die Distanz zwischen dem Einspeisung-Loch (60) und der Dichtung (64) des Schwimmers (32) in Ruheposition einen Leerlauf-Hub (68) des Schwimmers (32) definiert, während welchem das Fluid durch den Schwimmer (32) nicht unter Druck versetzt wird.

8. Aktuator-Vorrichtung (4) nach Anspruch 7, wobei die Dichtung (64) des Schwimmers (32) in einer derartigen Weise geformt ist, um das Einspeisung-Loch (60) nach einem zweiten Betätigung-Hub (42) größer oder gleich dem Leerlauf-Hub (68) in der zweiten Betätigung-Richtung (B) zu schließen.

9. Aktuator-Vorrichtung (4) nach einem vorhergehenden Anspruch, wobei die elastischen Mittel (44) koaxial zu dem Schwimmer (32) zwischen einer Schulter (72) des Vorrichtung-Körpers (12) und einer Platte (76) integral mit dem Schwimmer (32) angeordnet sind, um vorgespannt zu sein und den Schwimmer (32) in einem Ruhe-Zustand zu beeinflussen, wobei das Fluid in der hydraulischen Fluid-Kammer (28) durch den Schwimmer (32) nicht unter Druck versetzt wird.

10. Aktuator-Vorrichtung (4) nach einem der vorhergehenden Ansprüche, wobei der Flüssigkeit-Tank (56) mit dem Vorrichtung-Körper (12) integral ist.

11. Kombiniertes Rück-Vorder-Brems-System eines Motor-Fahrzeugs, umfassend eine Aktuator-Vorrichtung (4) nach einem vorhergehenden Anspruch und umfassend, als eine erste Brems-Vorrichtung (20), eine Trommelbremse, welche mit dem Betätigung-Stab (16) mechanisch verbunden ist, und umfassend, als eine zweite Brems-Vorrichtung (40), eine Scheibenbremse, welche einen Bremssattel in Fluid-Verbindung mit der hydraulischen Fluid-Kammer (28) des Vorrichtung-Körpers (12) aufweist.

12. System nach Anspruch 11, wobei der Scheibenbremsen-Sattel mit einem weiteren und unabhängig manuell betätigten Hebel oder einer Pedal-Vorrichtung (22) bereitgestellt ist.

13. System nach Anspruch 11 oder 12, wobei die Aktuator-Vorrichtung (4) mit dem Betätigung-Hebel oder Pedal (24) durch einen Verbindung-Stab (80) mechanisch verbunden ist, und wobei der Betätigung-Hebel oder das Pedal (24) mit einem Gelenk (84) für die Anbringung an einem Chassis (88) eines zuordenbaren Motor-Fahrzeugs (8) bereitgestellt ist, so dass die Aktuator-Vorrichtung (4) mit dem Betätigung-Stab (16) roto-verlagern kann.

14. Motor-Fahrzeug (8), umfassend eine Aktuator-Vorrichtung (4) nach einem der Ansprüche 1 bis 10.

15. Motor-Fahrzeug (8), umfassend ein System nach einem der Ansprüche 11 bis 13, wobei das Motor-Fahrzeug (8) ein Chassis (88) umfasst, und wobei die Aktuator-Vorrichtung (4) mit dem Betätigung-Hebel oder dem Pedal (24) durch einen Verbindung-Stab (80) mechanisch verbunden ist, und wobei der Betätigung-Hebel oder das Pedal (24) mit einem Gelenk (84) bereitgestellt ist, welches an dem Chassis (88) angebracht ist, so dass die Aktuator-Vorrichtung (4) mit dem Betätigung-Stab (16) roto-verlagern kann, während der Betätigung-Hebel oder das Pedal (24) durch eine Rotation um das Gelenk (84) betätigt wird.

16. Motor-Fahrzeug (8) nach Anspruch 14 oder 15, wobei das Brems-System ein kombiniertes Vorder-Rück-Brems-System ist, wobei die erste mechanisch betätigte Brems-Vorrichtung (20) wenigstens eine Trommelbremse ist, welche an einer hinteren Achse (90) des Motor-Fahrzeugs (8) angeordnet ist, und die zweite hydraulisch betätigte Brems-Vorrichtung (40) wenigstens eine Scheibenbremse ist, welche an der vorderen Achse (92) des Motor-Fahrzeugs (8) angeordnet ist.

## Revendications

1. Dispositif actionneur (4) pour système de frein arrière-avant combiné d'un véhicule à moteur (8) comprenant :
un corps de dispositif (12) logeant et guidant une bielle d'actionnement (16) pour l'actionnement mécanique d'un premier dispositif de freinage pouvant être associé (20), où le corps de dispositif (12) contraint la bielle d'actionnement (16) à coulisser dans une direction axiale (X-X),
une pédale ou un levier actionné(e) manuellement (24) raccordé(e) mécaniquement audit corps de dispositif (12) afin de commander sa translation suivant ladite direction axiale (X-X), d'une première course d'actionnement (26) selon une première direction d'actionnement (A),
- dans lequel le corps de dispositif (12) définit une chambre de fluide hydraulique (28) qui loge un flotteur (32) adapté pour mettre sous pression ladite chambre de fluide hydraulique (28), ladite chambre (28) étant capable d'être raccordée fluidiquement par le biais d'un refoulement (36) à un second dispositif de freinage actionné hydrauliquement pouvant être associé (40), séparé du premier dispositif de freinage (20),
- dans lequel entre le flotteur (32) et le corps de dispositif (12) sont agencés des moyens élastiques (44) de façon à actionner le flotteur (32) et mettre sous pression la chambre de fluide hydraulique (28), en conséquence de l'actionnement de la bielle d'actionnement (16) par le levier ou par la pédale actionnée manuellement (24),
**caractérisé en ce que** le flotteur (32) et la bielle d'actionnement (16) sont mutuellement parallèles et coaxiaux suivant ladite direction axiale (X-X).

2. Dispositif actionneur (4) selon la revendication 1, dans lequel le corps de dispositif (12) tire en translation, suivant la direction axiale (X-X), la bielle d'actionnement (16) dans la première direction d'actionnement (A),
- dans lequel le corps de dispositif (12) définit une chambre de fluide hydraulique (28) qui loge un flotteur (32) adapté pour mettre sous pression le fluide de ladite chambre (28) lorsqu'il effectue une translation, par rapport au corps de dispositif (12), dans une direction axiale (X-X), d'une seconde course d'actionnement (42) dans une seconde direction d'actionnement (B) opposée à la première direction d'actionnement (A).

3. Dispositif actionneur (4) selon la revendication 2, dans lequel le corps de dispositif (12) comporte des moyens élastiques (44) qui exercent une poussée élastique sur le flotteur (32) dans la première direction d'actionnement (A) pour maintenir le corps de dispositif (12) et le flotteur (32) d'un seul tenant axial mutuel, lesdits moyens élastiques (44) s'opposant à la poussée d'actionnement du levier ou de la pédale d'actionnement (24),
- dans lequel le flotteur (32) effectue une translation, par rapport au corps de dispositif (12), de ladite seconde course d'actionnement (42) dans la seconde direction d'actionnement (B) lorsque la poussée exercée sur le corps de dispositif (12) au moyen du levier ou de la pédale d'actionnement (24) dépasse la poussée élastique exercée par les moyens élastiques (44).

4. Dispositif actionneur (4) selon une quelconque revendication précédente, dans lequel le flotteur (32) loge la bielle d'actionnement (16) qui présente un dégagement (48) par rapport au flotteur (32), de sorte que le flotteur (32) peut tirer en translation la bielle d'actionnement (16) uniquement dans la première direction d'actionnement (A).

5. Dispositif actionneur (4) selon l'une quelconque des revendications 1 à 3, dans lequel le flotteur (32) est contraint dans la direction axiale (X-X) sur la bielle d'actionnement (16), de façon à rendre ledit flotteur (32) et ladite bielle d'actionnement (16) d'un seul tenant.

6. Dispositif actionneur (4) selon une quelconque revendication précédente, dans lequel le flotteur (32) a un interrupteur de fin de course (52) par rapport au corps de dispositif (12) qui définit le positionnement de flotteur au repos (32), de façon à effectuer une translation par rapport au corps de dispositif (12) uniquement d'une seconde course d'actionnement (42) dans une seconde direction d'actionnement (B) opposée à ladite première direction d'actionnement (A).

7. Dispositif actionneur (4) selon la revendication 6, où le corps de dispositif (12) est en raccordement fluidique avec un réservoir de liquide (56) qui est raccordé à ladite chambre de fluide hydraulique (28) par le biais d'un trou d'amenée (60), dans lequel, en position de repos du dispositif actionneur (4), le trou d'amenée (60) est agencé espacé axialement d'un joint d'étanchéité (64) du flotteur (32) dans la seconde direction d'actionnement (B), la distance entre le trou d'amenée (60) et le joint d'étanchéité (64) du flotteur (32) en position de repos définissant une course à vide (68) du flotteur (32), durant laquelle le fluide n'est pas mis sous pression par le flotteur (32).

8. Dispositif actionneur (4) selon la revendication 7, dans lequel le joint d'étanchéité (64) du flotteur (32) est formé de façon à fermer le trou d'amenée (60) après une seconde course d'actionnement (42) supérieure ou égale à ladite course à vide (68), dans ladite seconde direction d'actionnement (B).

9. Dispositif actionneur (4) selon une quelconque revendication précédente, dans lequel les moyens élastiques (44) sont agencés coaxialement au flotteur (32), entre un épaulement (72) du corps de dispositif (12) et une plaque (76) d'un seul tenant avec le flotteur (32) de façon à être préchargés et influencer le flotteur (32) dans un état de repos dans lequel le fluide dans la chambre de fluide hydraulique (28) n'est pas mis sous pression par le flotteur (32).

10. Dispositif actionneur (4) selon l'une quelconque des revendications précédentes, dans lequel ledit réservoir de liquide (56) est d'un seul tenant avec le corps de dispositif (12).

11. Système de frein arrière-avant combiné d'un véhicule à moteur comprenant un dispositif actionneur (4) selon une quelconque revendication précédente et comportant, en tant que premier dispositif de freinage (20), un frein à tambour, raccordé mécaniquement à ladite bielle d'actionnement (16), et comportant en tant que second dispositif de freinage (40) un frein à disque ayant un étrier de frein en relation fluidique avec ladite chambre de fluide hydraulique (28) du corps de dispositif (12).

12. Système selon la revendication 11, dans lequel ledit étrier de frein à disque est pourvu d'un dispositif de levier ou de pédale supplémentaire et indépendant actionné manuellement (22).

13. Système selon la revendication 11 ou 12, dans lequel ledit dispositif actionneur (4) est raccordé mécaniquement au levier ou à la pédale d'actionnement (24) par le biais d'une bielle de raccordement (80), et dans lequel ledit levier ou ladite pédale d'actionnement (24) est pourvu(e) d'une articulation (84) permettant la fixation à un châssis (88) d'un véhicule à moteur pouvant être associé (8), de sorte que le dispositif actionneur (4) peut effectuer une rotation-translation avec la bielle d'actionnement (16).

14. Véhicule à moteur (8) comprenant un dispositif actionneur (4) selon l'une quelconque des revendications 1 à 10.

15. Véhicule à moteur (8) comprenant un système selon l'une quelconque des revendications 11 à 13, dans lequel le véhicule à moteur (8) comprend un châssis (88), et dans lequel le dispositif actionneur (4) est raccordé mécaniquement au levier ou à la pédale d'actionnement (24) par le biais d'une bielle de raccordement (80), et dans lequel ledit levier ou ladite pédale d'actionnement (24) est pourvu(e) d'une articulation (84) fixée audit châssis (88) de sorte que le dispositif actionneur (4) peut effectuer une rotation-translation avec la bielle d'actionnement (16), tandis que le levier ou la pédale d'actionnement (24) est actionné(e) par rotation autour de l'articulation (84).

16. Véhicule à moteur (8) selon la revendication 14 ou 15, dans lequel ledit système de freinage est un système de frein avant-arrière combiné, dans lequel le premier dispositif de freinage actionné mécaniquement (20) est au moins un frein à tambour agencé sur un essieu arrière (90) du véhicule à moteur (8) et le second dispositif de freinage actionné hydrauliquement (40) est au moins un frein à disque agencé sur l'essieu avant (92) du véhicule à moteur (8).
